# EUROPEAN PATENT SPECIFICATION

(11) **EP 1 771 094 B1**
(45) Date of publication and mention of the grant of the patent: **23.07.2008**
(21) Application number: 05741870.9
(22) Date of filing: 24.05.2005
(51) Int. Cl.: A23L 3/36, A23L 3/26, F25D 11/00, F25D 17/04

(54) **A COOLING DEVICE**
KÜHLVORRICHTUNG
DISPOSITIF DE REFROIDISSEMENT

(30) Priority: 25.05.2004 TR 200401161
(43) Date of publication of application: 11.04.2007
(73) Proprietor: Arçelik Anonim Sirketi, 34950 Istanbul (TR)
(72) Inventor: ARISOY, Emre, Tuzla, 34950 Istanbul (TR); INAN, Cemil, Tuzla, 34950 Istanbul (TR)
(86) International application number: PCT/IB2005/051691
(87) International publication number: WO 2005/115177

(56) References cited:
- DE-A1- 3 105 886
- US-A- 3 543 021
- US-A- 5 484 570
- US-A1- 2004 035 128
- PATENT ABSTRACTS OF JAPAN vol. 2003, no. 12, 5 December 2003 (2003-12-05) & JP 2004 263973 A (SHARP CORP), 24 September 2004 (2004-09-24)
- PATENT ABSTRACTS OF JAPAN vol. 017, no. 548 (M-1490), 4 October 1993 (1993-10-04) & JP 05 149671 A (MITSUBISHI ELECTRIC CORP), 15 June 1993 (1993-06-15)

## Description

This invention relates to a cooling device wherein means are provided for sterilizing by removing microorganisms in order to prevent the foodstuff placed thereinside from spoiling.

Foods left open are the most suitable media where microorganisms can live and reproduce. If proper cautions are not considered during preservation of foods, said microorganisms reproduce rapidly and cause foods to spoil and, as a result of spoiling a bad odour is generated. Preserving foods in cooling devices makes the food to spoil in a longer period of time; however, still it is not possible to completely destroy the microorganisms that cause the mentioned spoiling. For that reason, in cooling devices, various ionizers are utilized in order for foods to be preserved in a more sterile medium purified from microorganisms by removing microorganisms in the surroundings of the cooling device or on foods placed inside the cooling device as much as possible from the interior of the cooling and / or freezing compartments where foods are preserved.

Ionizer is simply a device comprising a high voltage generator and at least one electrode connected to the said high voltage generator. It is a device wherein the amount of ions in the environment is increased by ionizing the air around the electrode as a result of the high voltage applied to the mentioned electrode by the high voltage generator and, microorganisms in the environment are destroyed as they are surrounded by afore-mentioned ions.

In cooling devices, ionizers are utilized to remove microorganisms (bacteria, virus, microbe etc.) out of the cooling device, which microorganisms are located on the foods placed inside and / or enter inside as the door of the cooling compartment or freezing compartment is opened and shorten the preservation period of the foodstuff placed inside and cause the generation of bad odour as a result of the spoiling of said foodstuff. Ionizers are also frequently utilized, particularly in air conditioners.

In the current state of the art, in the Switzerland Patent Document CH 618346, a description is given of an ionizer located inside a cooling device to enhance the sterilizing effect, whereby it is achieved to increase the amount of negative ions in the air by applying high voltage to the electrodes.

In another current state of the art, in the German Patent Document DE 3105886, a description is given of an ionizer which is positioned in the air duct and is supplied with high voltage.

In the current state of the art, in the Japanese Patent Document JP 5149671, a description is given of a deodorizer which consists of an ion generator that is activated and deactivated with respect to the frequency of the opening and closing of the door of the cooling device.

In the current state of the art, in the Japanese Patent Document JP 11347111, a description is given of an application wherein an ionizer the operation of which is controlled by means of an ion sensor and a fan are active when foods are placed to a special compartment where said ionizer is located and, the ionizer is activated periodically in order to reduce energy consumption.

In all of the afore-mentioned applications in the current state of the art, the ionizer is operated for certain periods of time determined by the manufacturer. However, due to various factors such as the environment of the cooling device or the diversity of foods placed inside, it is possible that the operating of the ionizer should be controlled by the user.

The object of the present invention is the realization of a cooling device wherein means are provided for sterilizing by removing microorganisms in order to prevent the foodstuff placed thereinside from spoiling.

The cooling device designed to fulfill the objectives of the present invention is illustrated in the attached figures where:

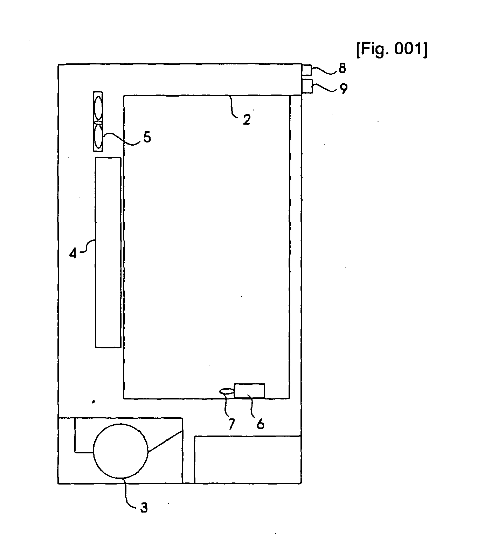

Fig.1 - is a schematic view of a cooling device.

Parts shown in figures are numbered as follows:
1. Cooling device
2. Compartment
3. Compressor
4. Evaporator
5. Fan
6. Ionizer
7. Electrode
8. Input device
9. Display

The cooling device (1), the object of the present invention, comprises a compressor (3) used to circulate the refrigerant in the refrigeration cycle by compressing, one or more than one compartment (2) where foods are placed inside in order to be cooled and / or frozen, an evaporator (4) whereby heat transfer between the refrigerant and the environment is achieved, a fan (5) used to transfer the air cooled by the evaporator (4) into the compartment (2) and to blow the air warmed inside the compartment (2) back onto the evaporator (4), an ionizer (6) comprising a high voltage generator and at least one electrode (7) connected to the said high voltage generator an which (6) is utilized to increase the amount of negative ions by ionizing the air around the electrode (7) as a result of the high voltage applied to the mentioned electrode (7) by the high voltage generator wherein microorganisms inside the air are destroyed as they are surrounded by the said negative ions, a input device (8) enabling the user to enter data and, a control card used to control the ionizer (6) to operate with respect to the data entered through the input device (8), outside the conditions determined by the manufacturer (Figure 1).

The ionizer (6) incorporates a, preferably 5000 - 10000 DC V, high voltage generator which is supplied by the network voltage and which increases the network voltage and, an electrode (7) connected to the outlet of the said high voltage generator. When high voltage is applied to the electrode (7), air molecules around the electrode (7) are ionized and the amount of the negative ions in the environment is increased.

In the preferred embodiment of the present invention, heat transfer occurs between the cold air that is cooled by means of the evaporator (4) and transferred to the compartment (2) by being blown by the fan (5) and foods placed inside the compartment (2) and, the air that is warmed as foods are cooled is routed from the compartment (2) back onto the evaporator (4). The air that passing over the foods and containing microorganisms passes over the electrode (7) due to the suction of the fan (5). As the ionizer (6) operates, as a result of high voltage, an electric field is generated between the electrode (7) and the air around it and therefore, molecules inside the air (water etc.) dissociate into their ions and the amount of negative ions is increased around the electrode (7). As a result, by surrounding the microorganisms inside the compartment (2) which are transferred through the air current, said negative ions causes them either to die due to lack of air or to become heavier and precipitate.

If large amounts of foods are loaded into the cooling device (1) and / or odorous foods are placed, the user may utilize the input device (8) to operate the ionizer (6) outside the conditions determined by the manufacturer, starting from the moment that the user gives the run command to the input device (8). Thereby, it is achieved that the user may operate the ionizer (6) more or less frequently for a longer or shorter period of time and also, that the user is enabled to activate and deactivate the ionizer (6) and to change the power of the ionizer (6) by increasing and decreasing.

To describe the operation of the cooling device (1), the object of the present invention, following symbols are utilized :

t_{ION} : is the predetermined operation period of the ionizer (6), in the normal operation cycle.

t_{ION_MIN} : is the predetermined minimum waiting time for the ionizer (6) to restart, in the normal operation cycle.

t_{ION_INPUT} : is the operation period of the ionizer (6) determined by utilizing the input device (8) outside the conditions determined by the manufacturer.

t_{ION_INPUT_MIN} : is the minimum waiting time for the ionizer (6) to restart, determined by utilizing the input device (8) outside the conditions determined by the manufacturer.

The input device (8) is positioned on the cooling device (1) and, as data is entered by means of the input device (8), it is achieved that the ionizer (6) operates for the operation period (t_{ION_INPUT}) which is determined by utilizing the input device (8) and preferably longer than the predetermined operation period (t_{ION}) and, that the minimum waiting time (t_{ION_INPUT_MIN}) for the ionizer (6) to restart, determined by utilizing the inputdevice (8) is preferably shorter than the predetermined minimum waiting time (t _{ION_MIN}) for the ionizer (6) to restart, in the normal operation cycle. As the periods (t _{ION_INPUT}) and (t_{ION_INPUT_MIN}) in this application started to be measured at the instant data entered may be the periods (t_{ION}) and (t_{ION_MIN}) determined by the manufacturer, they may also be periods changed by the user by means of the input device (8).

In the present invention, the input device (8) comprises one or more than one key and, the ionizer (6) is turned on as the said key is pressed by the user and keeps operating for the operation period (t_{ION_INPUT}) determined by utilizing the input device (8). As the operation period (t_{ION_INPUT}) of the ionizer (6) is completed, it continues to operate by returning to the normal operation cycle. As the operation period (t_{ION_INPUT}) determined by utilizing the input device (8) may be the operation period (t_{ION}) in the normal operation cycle, it may also be a different period (t _{ION_INPUT}) than the operation period (t_{ION}) of the ionizer (6) in the normal operation cycle.

In an embodiment of the present invention, the input device (8) uses two keys. The operation period (t_{ION_INPUT}) of the ionizer (6) may be set by utilizing one of the said keys and the minimum waiting time to restart (t_{ION_MIN_INPUT}) may be set by utilizing the other. Both of the keys incorporate one or more than one stage, enabling the user to select one or more than one operation stage of the ionizer (6).

In another embodiment of the present invention, the inputdevice (8) uses a keypad functioning as a keyboard. By utilizing the keypad, the user can change the operation period (t_{ION_INPUT}) and the periods between two operations (t_{ION_INPUT_MIN}) to desired values.

In the preferred embodiment of the present invention, the cooling device (1) comprises a display (9) which gets active when the ionizer (6) is activated. Thereby, whether the ionizer (6) is operating, the operation period, the operation interval, power and similar properties may be shown to the user.

By means of the cooling device (1) the object of the present invention, it is achieved that foods are preserved in a more sterile environment by removing the microorganisms inside the cooling device (1) to the outside of the cooling device (1) and that the user may control the operating of the ionizer (6) if necessary due to various factors such as the environment of the cooling device (1) or the diversity of foods placed inside etc.

## Claims

1. A cooling device (1) comprising
- one or more than one compartment (2) where foods are placed inside in order to be cooled and / or frozen,
- a compressor (3) used to circulate the refrigerant in the refrigeration cycle by compressing,
- an evaporator (4) whereby heat transfer between the refrigerant and the environment is achieved,
- a fan (5) used to transfer the air cooled by the evaporator (4) into the compartment (2) and to blow the air warmed inside the compartment (2) back onto the evaporator (4),
- an ionizer (6) comprising, a high voltage generator and at least one electrode (7) connected to the said high voltage generator, and which (6) is utilized to increase the amount of negative ions by ionizing the air around the electrode (7) as a result of the high voltage applied to the mentioned electrode (7) by the high voltage generator wherein microorganisms inside the air are destroyed as they are surrounded by the said negative ions,
and **characterized by** an input device (8) enabling the user to enter data concerning the operation of the ionizer (6) and, by the control of the ionizer (6) to operate with respect to the data entered through the input device (8), such that the user may operate the ionizer (6) more or less frequently or for a longer or shorter period of time or change the power of the ionizer (6) by increasing and decreasing outside the conditions determined by the manufacturer, whereby the input device (8) comprises one or more than one key and, the ionizer (6) is turned on as the said key is pressed by the user and keeps operating for the operation period (t_{ION_INPUT}) determined by utilizing the input device (8). As the operation period (t _{ION_INPUT}) of the ionizer (6) is completed, it continues to operate by returning to the normal operation cycle.

2. A cooling device (1) as described in Claim 1, **characterized by** the fact that the user may activate and deactivate the ionizer (6) by means of the input device (8).

3. A cooling device (1) as described in any of the above Claims, **characterized by** a display (9) whereby whether the ionizer (6) is operating, the operation period, the operation interval, power and similar properties may be shown to the user.

## Patentansprüche

1. Kühlvorrichtung (1), umfassend:
- ein oder mehrere Fächer (2), in denen zu kühlende und/oder einzufrierende Lebensmittel gelagert werden,
- ein Kompressor (3), der dazu dient, durch Kompression Kühlmittel im Kühlzyklus zu zirkulieren,
- ein Verdampfer (4), durch den eine Wärmeübertragung zwischen dem Kühlmittel und der Umgebung erreicht wird,
- ein Gebläse (5), das dazu dient, die von dem Verdampfer (4) gekühlte Luft in das Fach (2) zu leiten, und die Luft, die sich im Fach (2) erwärmt hat, zurück zum Verdampfer (4) zu blasen,
- eine Ionisierungseinrichtung (6), der einen Hochspannungsgenerator und wenigstens eine Elektrode (7) umfasst, die mit dem Hochspannungsgenerator verbunden ist, und die (6) dazu benutzt wird, durch Ionisieren der Luft um die Elektrode (7) herum die Menge an negativen Ionen zu erhöhen, indem von dem Hochspannungsgenerator Hochspannung an die Elektrode (7) angelegt wird, wobei Mikroorganismen in der Luft vernichtet werden, wenn sie von den negativen Ionen umgeben sind,
und **gekennzeichnet durch** eine Eingabevorrichtung (8), die es dem Benutzer erlaubt, Daten bezüglich des Betriebs der Ionisierungseinrichtung (6) einzugeben, und **durch** Steuern der Ionisierungsvorrichtung (6) einen Betrieb unter Berücksichtigung der über die Eingabevorrichtung (8) eingegebenen Daten durchzuführen, derart, dass der Benutzer die Ionisierungseinrichtung (6) häufiger oder weniger häufig über einen längeren oder kürzeren Zeitraum betreiben kann, oder die Leistung der Ionisierungseinrichtung (6) verändern kann, indem eine Erhöhung oder Senkung außerhalb der vom Hersteller festgelegten Bedingungen vorgenommen wird, wobei die Eingabevorrichtung (8) eine oder mehrere Tasten umfasst, und die Ionisierungseinrichtung (6) eingeschaltet wird, indem die Taste von dem Benutzer gedrückt wird, und über den Betriebszeitraum (t_{ION_EINGANG}) hinweg arbeitet, der **durch** Verwenden der Eingabevorrichtung (8) festgelegt wurde, und die Ionisierungseinrichtung (6) nach Ablauf des Betriebszeitraums (t_{ION_EINGANG}) weiterarbeitet, indem sie in den normalen Betriebszyklus zurückkehrt.

2. Kühlvorrichtung (1) nach Anspruch 1, **dadurch gekennzeichnet, dass** der Benutzer die Ionisierungseinrichtung (6) mit Hilfe der Eingabevorrichtung (8) aktivieren und deaktivieren kann.

3. Kühlvorrichtung (1) nach einem der vorangehenden Ansprüche, **gekennzeichnet durch** eine Anzeige (9), über die dem Benutzer angezeigt werden kann, ob die Ionisierungseinrichtung (6) in Betrieb ist, und ihm der Betriebszeitraum, das Betriebsintervall, die Leistung und ähnliche Eigenschaften angezeigt werden können.

## Revendications

1. Un dispositif de refroidissement (1) comprenant
- un ou plusieurs compartiments (2) dans lesquels les nourritures sont placées pour être refroidies ou gelées,
- un compresseur (3) utilisé pour faire circuler le réfrigérant dans le cycle de réfrigération par la compression,
- un évaporateur (4) par lequel la transmission de chaleur entre le réfrigérant et l'environnement est assurée,
- un ventilateur (5) utilisé pour transmettre l'air refroidi par l'évaporateur (4) dans le compartiment (2) et pour souffler l'air chauffé dans le compartiment (2) arrière sur l'évaporateur (4),
- un ioniseur (6) comprenant un générateur de haut voltage et au moins une électrode (7) connectée audit générateur de haut voltage, lequel (6) est utilisé pour augmenter la quantité d'ions négatifs en ionisant l'air qui se trouve autour de l'électrode (7) en conséquence du haut voltage appliqué à ladite électrode (7) par le générateur de haut voltage à l'aide duquel les microorganismes dans l'air sont détruits par le fait qu'ils aient entourés des ions négatifs,
et **caractérisé par** un dispositif d'entrée (8) permettant à l'utilisateur d'entrer les données concernant l'opération de l'ioniseur (6) et, par le contrôle de l'ioniseur (6) pour son fonctionnement suivant les données entrées à travers ledit dispositif d'entrée (8), de façon à ce que l'utilisateur puisse utiliser l'ioniseur (6) plus ou moins fréquemment ou pour un laps de temps plus ou moins long, ou qu'il puisse changer la puissance de l'ioniseur (6) en augmentant ou diminuant les conditions extérieures déterminées par le fabricant, ledit dispositif d'entrée (8) comprenant un ou plusieurs boutons ; l'ioniseur (6) est mis en marche lorsque l'utilisateur appuie sur ledit bouton, et continue à fonctionner pendant la période d'opération (t_{ENTRÉE D'ION}) déterminée par l'utilisation du dispositif d'entrée (8) ; et quand la période d'opération (t_{ENTRÉE D'ION}) de l'ioniseur (6) se termine, le fonctionnement continue en retournant au cycle de l'opération normale.

2. Un dispositif de refroidissement (1) selon la revendication 1, **caractérisé par le fait que** l'utilisateur puisse activer ou désactiver l'ioniseur (6) à l'aide du dispositif d'entrée (8).

3. Un dispositif de refroidissement (1) selon l'une des revendications précédentes, **caractérisé par** un écran (9) par lequel lorsque l'ioniseur (6) est en opération, la période d'opération, l'intervalle d'opération, la puissance et les autres particularités similaires peuvent être montrées par l'utilisateur.
